# EUROPEAN PATENT SPECIFICATION

(11) **EP 1 197 094 B1**
(45) Date of publication and mention of the grant of the patent: **11.02.2004**
(21) Application number: 00942345.0
(22) Date of filing: 06.07.2000
(51) Int. Cl.: H04N 13/02, H04N 13/04

(54) **STEREOSCOPIC VIDEO OBSERVATION AND IMAGE MAGNIFICATION SYSTEM**
STEREOSKOPISCHE VIDEOBETRACHTUNG UND BILDVERGRÖSSERUNGSSYSTEM
OBSERVATION VIDEO STEREOSCOPIQUE ET SYSTEME DE GROSSISSEMENT D'IMAGE

(30) Priority: 13.07.1999 US 143443 P
(43) Date of publication of application: 17.04.2002
(73) Proprietor: Surgivision Ltd., 46661 Herzelia (IL)
(72) Inventor: KUSKAS, Guy, 46661 Herzelia (IL)
(74) Representative: Geoffrey Owen & Company
(86) International application number: PCT/IL2000/000398
(87) International publication number: WO 2001/005161

(56) References cited:
- EP-A- 0 830 034
- WO-A-96/22660
- US-A- 5 748 199

## Description

### TECHNICAL FIELD

The present invention relates generally to a stereoscopic observation system, and more particularly to a stereoscopic video observation and magnification system to be utilized in surgery and other medical applications.

### BACKGROUND ART

At present surgeons performing surgical and other medical operations are obliged to utilize different observation methods across a set of different surgical sessions or even within a single session. Each observation method involves the use of different instruments and equipment. Although for some surgical operations unaided or natural observation is sufficient, many types of surgery demand magnification of the operating field view and enhancement of the surgeon's vision. Surgeons performing such surgical procedures are provided with a magnified view of the area upon which they operate by utilizing a series of optical devices having an associated range of magnification capabilities. The group of operative magnifying devices comprises various optical systems such as simple hand-held loupes, wearable binocular loupes with or without headlight, or, in the case of microsurgery, surgical microscopes. Typically, loupe-aided observation provides magnifications in the range of 2 to 3 (also larger magnification is available but the equipment is unwieldy and less frequently used) whereas the range of magnifications for a microscope is typically 8 or above. Utilizing diverse observation methods and related equipment is a distinct disadvantage of the present surgical observation technique. None of the existing techniques provide "see through his eyes" option or the capability of conveying the image seen by the surgeon to the eyes of the surgeon assistants and other experts present at the performance of a surgical procedure.
Trends of modern surgery point towards the development of less invasive and minimally invasive surgery techniques, which provide less exposure and therefore require more magnifying and enhancing vision and visualization tools. Such less invasive surgery techniques include microsurgery needing a surgical microscope, endoscopic surgery using laparoscopes or endoscopes, computer assisted surgery, robotic and telesurgery implemented by using computer assisted systems associated in specific procedures to augmented reality techniques, and classical surgery procedure, or direct minimal invasive surgery that involve minimal access to the operation field.
Some of the surgeries mentioned above such as endoscopic surgery and computer assisted, robotic and telesurgery necessitate specific visualization systems, and may require, in addition, utilization of interfacing magnification and enhancing vision devices. Other methods of surgery such as microsurgery and classical surgery procedures involving the utilization of an operating room surgical microscope demand magnification and enhancement of the surgeon's vision. The treatment of remote organs and anatomical spaces, which are difficult to expose and to reach during surgery as well as generic surgical steps such as microsurgical dissection, suturing techniques, free flap, artery and vein anastomosis, interposition vein graft, end to side anastomosis, nerve graft, maxillofacial microsurgery, vasovasostomy, implant organ surgery, fallopian tube anastomosis and the like, would substantially benefit from magnification and 3D online imaging. Modem surgical procedure demand upgraded conditions of visualization to improve the quality of surgery, reduce the length of the operation, the trauma for the patient and therefore reduce the complications rate and hospitalization length. Accordingly, more sophisticated systems have been developed for assisting visualization during surgical procedures. For example, US 4,395,731 discloses a method and apparatus for providing a surgeon a magnified view of his manual manipulations during a surgery. However, prior art systems still suffer from a number of drawbacks.
An advanced visualization tool should be an integrated system comprising a real time imaging system with adjustable display, that will provide a three-dimensional high-resolution color image balanced and optimized automatically and dynamically to comply with the changing conditions during the surgery, wide-range magnification tools, and readily utilized operator controls enabled to change some of the operative parameters according to the prevailing conditions. The system should provide the option of "see-through" to the surgeon during the surgical procedure. The system should also provide "see through his eyes" capability to the assistants and experts during the surgical procedure by suitably transmitting identical images to those displayed to the surgeon to the eyes of additional persons present during the procedure. Additionally the system should provide recording capability to enable repeated replay of the record of the procedure to the purpose of study, analysis, archiving, and the like. Prior art systems do not provide such capabilities.

### DISCLOSURE OF INVENTION

One aspect of the present invention regards a method of displaying in real time, dynamic, variably magnified, optimized and stereoscopic images of a physical application space to a human operator to aid in observing and manipulating objects within that application space, the method contains generating dynamic images of the application space by image-sensing devices, encoding the images generated into electric signals, transmitting the signals representing the dynamic images to display devices situated in optical alignment with the eyes of an operator, decoding the signals representing the dynamic images and displaying the resulting reproduced images to the eyes of the operator.
A second aspect of the present invention regards a method of providing a human operator with colored, high-definition, variably magnified, dynamic, stereoscopic, qualitatively optimized reproduced images of a physical operating environment to aid the operation during an observation and manipulation session associated with objects within the environment. The method contains viewing images of the session by means of video cameras, transforming the images into video signals, sending the video signals via a set of suitable conduits to respective viewing screens situated between the operating environment and the eyes of the operator, decoding the video signals representing the video images into reproduced images, and displaying the reproduced video images on the viewing screens.
A third aspect of the present invention regards a stereoscopic observation and magnification system that contains two video cameras mechanically linked and embedded into a cameras module wearable by the operator, two display screens embedded into a head mounted display unit wearable by the operator, an operator controller unit, an interface and processing unit, a suitable video circuit connecting the cameras, the display screens, via which the cameras transmit video signals representing the dynamic images of the operating environment, serial communication links and circuit via which image quality control parameter values of the cameras are sent to the interface and processing unit and to thew operator controller unit in order to provide monitoring and consequently balancing and qualitatively optimizing the reproduced images.
Each and all the above aspects of the present invention provide improved quality of observation.
Each and all the above aspects of the present invention provide improved quality of object manipulation, and reduced duration of the manipulation session.

### BRIEF DESCRIPTION OF THE DRAWINGS

The present invention will be understood and appreciated more fully from the following detailed description taken in conjunction with the drawings in which:
Fig. 1 is a pictorial presentation of the main components of the system showing the functional locations of the components in relation to the user's body;
Fig. 2 is a simplified block diagram showing the main components of the system interconnected in a functional manner;
Fig. 3 is a graphic presentation of the geometric factors that define the stereoscopy-related spatial relationships among a pair of cameras and an observed object;
Fig. 4 is a graph of a qualitative performance of a stereoscopic system depending on the variation of the Inter Pupillary Distance in a given camera to object distance;
Fig. 5 is a schematic representation of the disposition of the components of the system;
Fig. 6 is a functional block diagram showing the hardware and software components of the Interface and Processing Unit;
Fig. 7 is high-level flow chart of the main operative function of the system;
Fig. 8 is a high-level flow chart corresponding to the sequence of control activation on the Operator Controller unit;
Fig. 9 is a high-level flow chart associated with the video level control using the readouts of the luminous data of the cameras;
Fig. 10 is a high-level flow chart of the focus control using the readouts of the cameras;
Fig. 11 is a high-level flow chart associated with the adjustment of IPD and DA values using the prior reading of the focus;
Fig. 12A, 12B, and 12C illustrate the mechanical structure of the Cameras Module including the motors and associated mechanical devices controlling the Inter Pupillary Distance (IPD) and the Convergence Angle (DA).

### BEST MODE FOR CARRYING OUT THE INVENTION AND INDUSTRIAL APPLICABILITY

The present invention overcomes the disadvantages of the prior art by providing a novel versatile stereoscopic viewing system in order to aid at surgery and other medical treatment requiring magnification of details in the surgery space.
The invention proposed is a computerized stereoscopic observation and magnification system for surgical purposes. This system combines picture quality of high-resolution video, flexibility of high power zoom and the ease of use achieved by the computerized automation. By using this powerful and efficient mechanism, the surgeon will be capable of working in a more effective and accurate manner thus it will be enabled to conduct difficult and complicated operations within a shorter period of time. The system provides for optimal performance, and maximum automation in order to improve the surgeon's concentration and reduce the physical effort involved in a complicated and lengthy surgical procedure. This system provides a variable field of view, continuous control of the magnification from about 1 (like the unaided eye) to about 10 by using practically the same equipment and in the same session if required. The entire system is lightweight and has low power consumption, which makes available the option for emergency crews to use it as field equipment. Additionally the system provides a set of advanced features such as a "see-through" capability, a "see-though-his-eyes" option and a recording and playback capability.

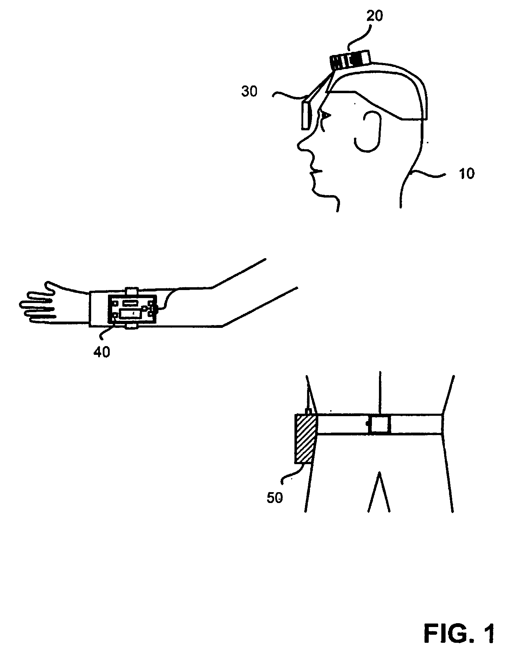

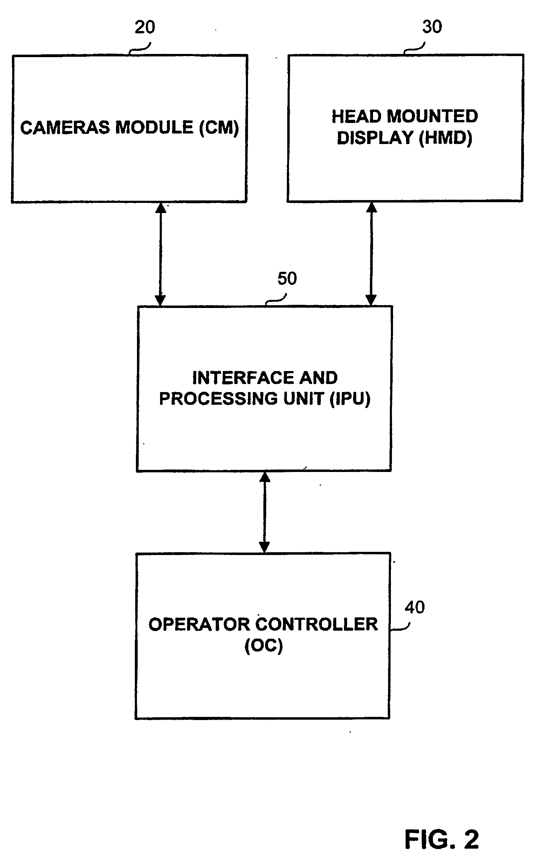

Reference is now made to Fig 1, and Fig. 2 illustrating the main components of the system as designed to be utilized as an aid for the performance of a session involving close observation and manual or semi-manual manipulation of objects. It would be easily perceived that the user of the system could be one of several types of operatives functioning in diverse domains that involve the performance of manual or semi-manual manipulations of objects inside an optionally bounded physical application space which necessitate intense, concentrated observation of the manipulated objects therefore demands variable magnification of the observed view as long as the manipulation session is in progress. The disclosed embodiments are merely exemplary of the proposed invention. The details disclosed should not be interpreted as limiting but only as means contributing to the clearer understanding of the present invention.
In the preferred embodiment of the present invention user 10 is a medical practitioner such as a surgeon utilizing the system as an aid to the performance of medical procedure such as surgery. User 10 preferably wears the main components of the system on or close to his body. Cameras Module (CM) 20 comprises a pair of light-weight sensor devices specializing in image-reception, image-encoding and image-transmitting such as video cameras mounted on a supporting apparatus such as a headband, headset or helmet which is positioned on user 10 head. The headgear and the two video cameras are configured in such a manner that temporarily simultaneous but spatially slightly different transmissions of appropriate digitally encoded electric signals, representing two monoscopic views, are provided to user 10 eyes thereby making available to user 10 the option of observing the surgery space in a stereoscopic mode. The electric signals that represent the real-World images are received optically by the cameras and are transmitted via suitable conduits to the Interface and Processing Unit (IPU) 50 which is loosely attached to user 10's body. The attachment is achieved by the use of suitable means such as a belt-mounted device and the like. Interface and Processing unit (IPU) 50 processes the digital signals automatically and in accordance with user 10 manual instructions entered through Operator Controller (OC) 40. The user enters instructions by manually activating various controls such as pushbuttons located on the upper surface of OC 40. OC 40 is shown attached by suitable means such as a strap or a Velco strip to the lower arm of user 10. The processed signals are transmitted via suitable cables to a Head Mounted Display (HMD) 30. Head Mounted Display 30 is situated in optical alignment between user 10 eyes and the surgery space being observed. Like all the other main components of the proposed system, HMD 30 is also wearable and in the preferred embodiment of the invention situated in front of the user 10 eyes in a similar manner to magnifying glasses. The signals transmitted to HMD 30 are decoded, structured into corresponding images and displayed on a pair of display devices such as Liquid Crystal Display (LCD) glasses and the like.
It would be easily perceived by one skilled in the art that the structure, location and the arrangement of the described components could be different for other contemplated embodiments of the present invention. For example, in a different embodiment of the present invention Operator Controller unit could by utilized by activating the operative controls thereon by wrist, foot, touch or voice. Details disclosed herein are merely the basis for the following claims.

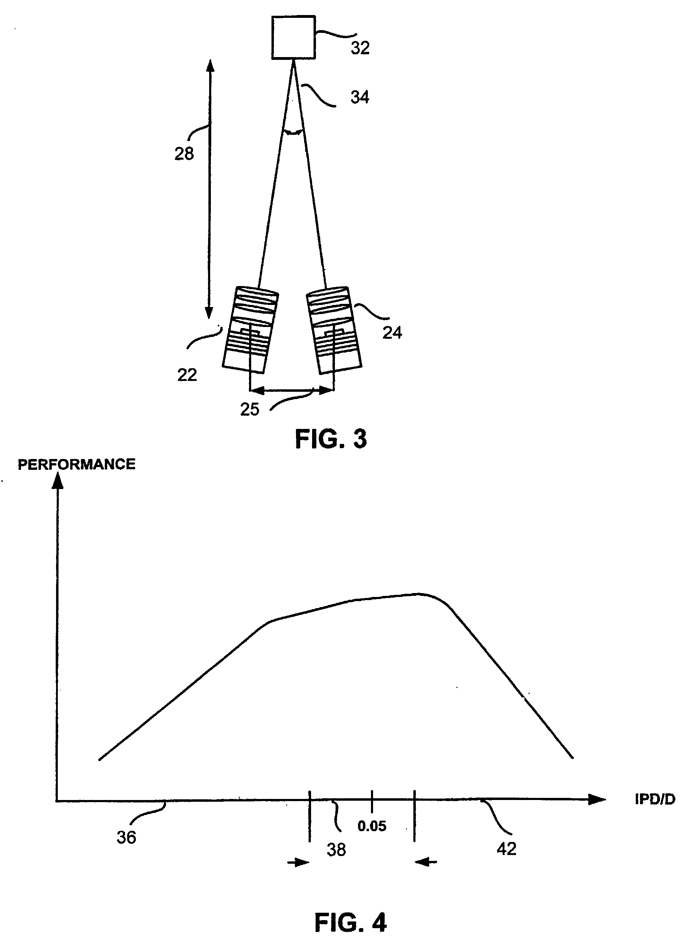

The system described in Fig. 3 employs two image-sensing devices such as two video cameras 22 and 24 corresponding to the two eyes of an observer. The cameras 22 and 24 are separated from each other by the gap known as Inter Pupillary Distance (IPD) 25 and are situated at a distance 28 from the object 32. Each camera is aimed to the object 32 from a slightly different angle so the lines of sight converge at the object 32. The lines of sight form a Convergence Angle (DA) 34. The picture is taken by each camera is displayed to the corresponding eye of the observer using the Head Mounted display HMD 30 of Fig. 1. The brain converts both pictures into three-dimensional scenery by virtue of its ability for depth perception.

Referring now to Fig. 4 where a qualitative performance of a stereoscopic system based on the variation in the value of IPD and the Converging Distance D is illustrated. Tests have been conducted to establish what is known as "the ideal 3D system" for a given situation. When establishing an optimal IPD and Converging Distance (D) the results of the tests show that there is a range of parameters that yield optimal performance. Referring to the ratio between the IPD and the distance of the object from the camera (D) as the main important measure, it is possible to discriminate between hypo stereoscopy 36 (too small IPD), optimal stereoscopy 38 and hyper stereoscopy 42 (too large IPD). In hypo stereoscopy the lack of depth perception is felt. Hyper stereoscopy yields confusion after a short time and fatigue. In order to optimize stereoscopic performance, the IPD is preferably re-adjusted according to the distance to the object. Unlike other 3D-video systems, the proposed system is capable of dynamically manipulating the IPD and Convergence Angle in order to achieve optical stereoscopy so that the depth effect is optimized without the undesired effects associated with loss of concentration or fatigue.

The system employs two Charge Coupled Device (CCD) or Solid State Sensor cameras that are embedded into a Camera Module. For the cameras Sony Japan Model EVI 370DG or the like could be used. The cameras should be provided with an embedded DSP (Digital Signal Processor) in order to enable operation in fully automatic mode or to be controlled externally through a serial communication port such as RS232/VISCA^{T} using Sony's special protocol. The entire set of the operative parameters of the camera is controllable from a remote computer (or by the suitable interface unit). The Cameras Module is designed to be mountable on diverse surfaces such as a helmet, a moving arm or a static boom. In addition to the cameras, the Cameras Module includes the mechanism required to change the Inter Pupillary Distance (IPD) and the Convergence Angle (DA) between the cameras utilizing at least two electric motor devices such as the Geared Minimotor made in Japan.

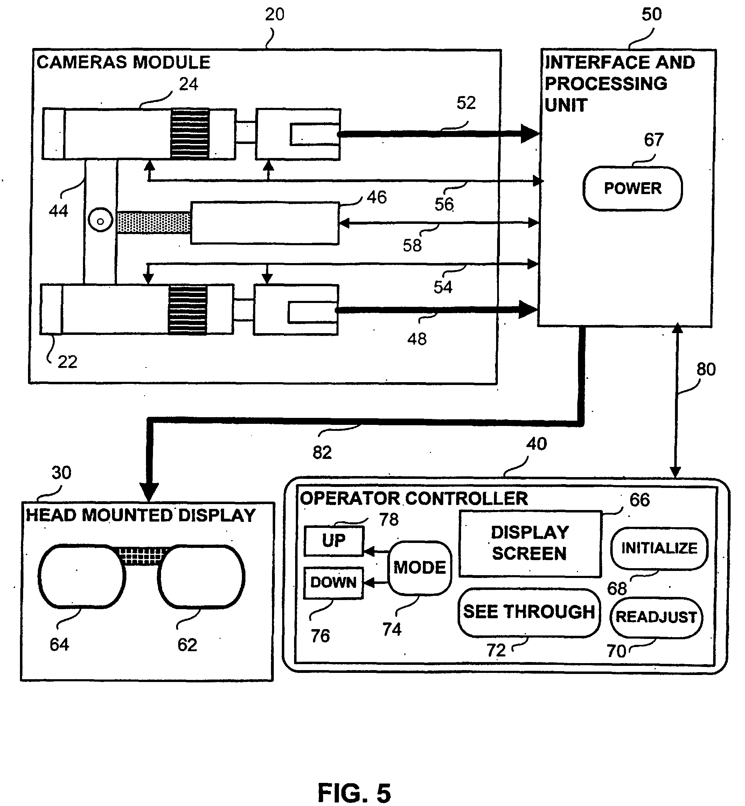

Referring now to Fig. 5 where a more detailed view of the components of the system of Fig. 2 is shown. Two cameras 22 and 24 are assembled as a camera module. Both cameras are equipped with an about X12 Zoom lens providing an horizontal field of view of about 48.8° to about 4.3° The cameras are controlled using serial communication links 54 and 56 so that each camera can be separately controlled in order to modify the system parameters and to balance the separate video channels associated with each camera. The S-Video (Super VHS) video signal is transmitted as two components Luminance and Chrominance for the forming of a better quality picture. The cameras of the system will preferably have an S-Video output. In order to accomplish optimization and balancing of the video levels between the cameras the Luminance (y) channel will be used to control video signal level.
Cameras 22 and 24 are mechanically linked by mechanical arm 44 connected to and controlled by IPD/Converging Angle mechanism 46. Camera 22 transmits video signals via conduit 48 and camera 24 transmits video signals via conduit 52 to IPU 50. Control signals corresponding to the various operative parameters of camera 22 and camera 24 are transmitted via conduit 54 and 56 respectively to IPU 50. Control signals resulting from the digital signal processing of IPU 50 are sent from IPU 50 to IPD/Convergence Angle control mechanism via conduit 58 in order to perform the correct positioning of the cameras 22 and 24 in relation to each other. IPU 50 is linked via control conduit 80 to Operator Controller (OC) 40 and via conduit 82 to HMD 30. HMD 30 comprises a pair of display units 62 and 64 such as LCD glasses. For the display, a known Head Mounted Display could be used such as Sony Japan Model LDI-D100BE, or the like. The model LDI-D100BE is a high-resolution display suitable for stereoscopy with the "See-Through" feature. The video signals received from IPU 50 are decoded and displayed on display units 62 and 64. In the preferred embodiment of the present invention OC 40 is hard-wired to IPU 50. In another embodiments of the present invention OC 40 may be modified for use with an IR (Infra Red) communication controller (like the home TV), by voice activation, Radio Transmission, or by any other form of communication now present or later developed suitable for this purpose.

The Cameras Module is connected to an Interface and Processing Unit (IPU). The Interface and Processing Unit, which is the "brain" of the system, controls the cameras, the mechanism that changes the position of the cameras (e.g. IPD and Convergence Angle) and the display. IPU 50 contains several functional components. Power control 67 is the main control of the system and the only manual control located on IPU 50. Power control 67 is preferably a guarded type switch to prevent accidental turn off. The other functional components of IPU 50 will be described in association with the following drawings.
Operator Controller unit (OC) 40 connected to IPU 50 via conduit 80. OC 40 is utilized by user 10 to transmit instructions to IPU 50 and to receive from IPU 50 the setting-related data of the system and the general status of the system. User 10 communicates with the system through a set of controls located on OC 40. When user 10 initiates an observation/manipulation session the Initialize control 68 is activated to evoke a startup-reset procedure in order to set the basic parameters of the system such as the initial values of the Field of View, Shutter speed, the Focusing distance, the IPD, and the Converging Angle (DA). Readjust control 70 is used when the operator wants to make sure that the system is well adjusted, or when some environmental parameter such as the ambient lighting was altered. Activating Readjust 70 will automatically replace some of the automatic adjustments normally required to optimize the system in real-time.
"See-through" is an advanced feature of known display devices to operate in two different modes: a) image display mode, and b) transparent mode. In image display mode the screen displays an image generated and transmitted by an appropriately connected image-sensing device, while in transparent mode the image is removed from the display screen which is then rendered transparent in order to enable an observer to look through the screen at the real scene beyond. When activated See-Through control 72 turns the display units 62 and 64 to the See-Through mode by rendering the respective display screens transparent thereby neutralizing the viewing device and enabling the observer to watch the scene through his eyes in the natural line of sight. Another press on See-Through control 72 toggles the display devices back to the view provided by the images transmitted from cameras 22 and 24 via, the respective video channels. When display units 62 and 64 are in See-Through mode the rest of the system including cameras 22 and 24 continue to function normally.
The Mode control 74 is proposed to operate cyclically. In order to change specific parameters made available to user 10 to modify, Mode control 74 is activated repeatedly and intermittently in order to select the appropriate mode and associated parameters to be changed. Up control 78 and Down control 76 are used to select the value of the respective parameter. For example, during the regular operation of the system the default mode is set to Field of View (FOV). In FOV mode the operator can control the magnification of the displayed image. By activating Up control 78 and Down control 76 the appropriate values a FOV are set, the corresponding Zoom-In or Zoom-Out effect is achieved and the image is effectively magnified or decreased in size. When the operator wishes to modify a different parameter Mode control 74 is activated and the current mode is switched to Auto White Balance (AWB). AWB is a method to balance the color components of the picture in order to produce natural colors. After switching to the desired mode a corresponding indication specifying the new selection will appear on Display Screen 66. When AWB mode is selected the activation of Up control 78 or Down control 76 will effect suitable selection of preset parameter values of AWB such as Indoors, Outdoors, or Auto. Further activation on Mode control 74 will effect the selection of the Stabilizers mode and the Up control 78 and Down control 76 will set the value of the parameter associated with the Stabilizers mode such as ON or OFF. Screen 66 could additionally display the system status, focus, zoom and various error messages.

It would be easily perceived that additional units could be connected to the main units described above. For example additional display units of either type (additional Head Mounted Displays, Monitors or Video Projectors) could be conceivably added to the basic configuration of the system in order to enable other members of the crew to observe the images viewed by user 10. The images could be also transmitted to outside the operating room via cables or wireless means for teaching or consulting purposes. Furthermore the system could utilize a communication encoder in order to transmit the video images in a compressed format to a remote location for an on-line expert assistance.

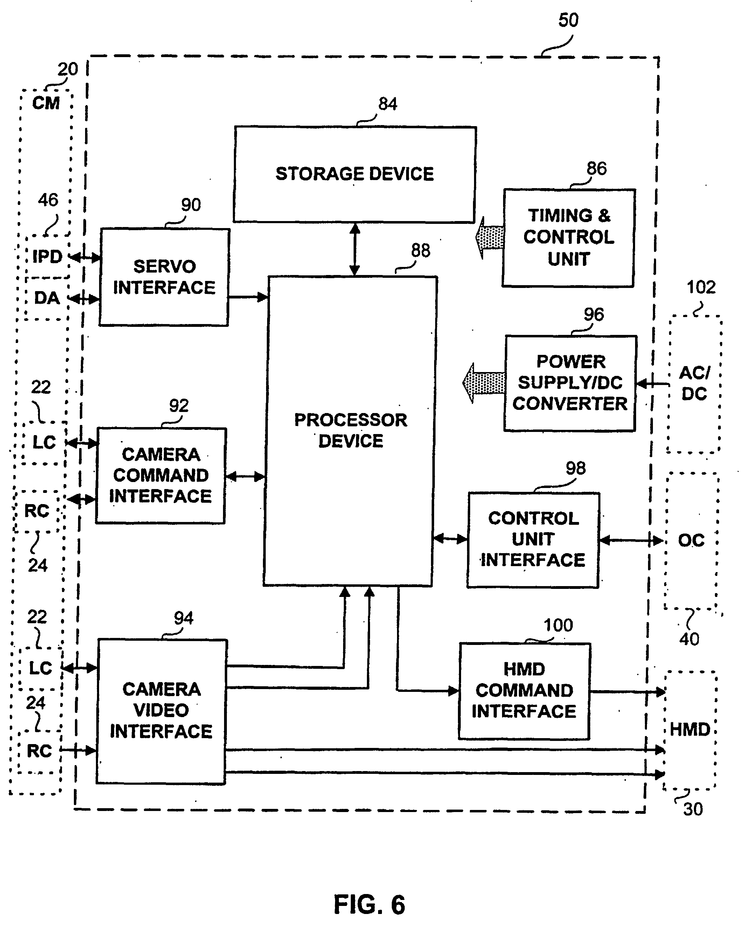

Referring now to Fig. 6 that provides a detailed illustration of the components of the Interface and Processing Unit (IPU). IPU 50 comprises a processor device 88, a storage device 84, a timing and control unit 86, a power supply/DC converter 96, a control unit interface 98, an HMD command interface 100, a servo interface 90, a camera command interface 92, and a camera video interface 94. Storage device 84 of Fig. 6 holds the operative software functions in executable binary files. The software functions are computer programs controlled by appropriately predetermined and preset parameter values, which are stored in suitable data structures. Cameras 22 and 24 transmit signals representing video images to camera video interface 94. The signals are transmitted via HMD command interface 100 to HMD 30 to be displayed on the respective display devices. Cameras 22 and 24 also transmit digital signals representing luminous data to processor device 88 to be processed and acted upon if necessary. According to the data received from the cameras 22 and 24 processor device 88 send commands via Camera Command Interface 92 and serial command lines 54 and 56 to cameras 22 and 24 in order to change the values of parameters in regard to the quality of the images such as the focusing distance of cameras 22 and 24. Processor device 88 will also send commands via servo interface 90 to IPD/Convergence Angle mechanism 46 in order to vary appropriately the spatial positioning of cameras 22 and 24 in relation to each other thereby establishing an optimal IPD and associated Convergence Angle to achieve the best depth perception for the user while keeping eye fatigue low.
Operator Controller (OC) 40 is connected to Processor device 88. OC 40 enables user 10 to control specific parameters of the system such as Field of View, Focus, Automatic White Balance and the like. The instructions of user 10 are transmitted to processor unit 88, and translated to specific commands by processor device 88 using software functions suitably encoded into executable binary format and stored on storage device 84. The commands are transmitted via camera command interface 92 and servo interface 90 to cameras 22 and 24 and to IPD/Convergence Angle control mechanism 46.
The cameras 22 and 24 have several automatic built-in functions such as Automatic Light Control (ALC) for controlling the video level of a camera by the lens iris and the shutter speed. The automatic built-in capabilities utilized to correct important operative parameters such as the focusing distance thereby enabling processor device 88 to provide for the automatic balancing of the image channels in all aspects. Processor 88 sets the respective parameters of the cameras 22 and 24 after analyzing the received digital control signals. The two images are corrected for proper focus, video level, and color balance. Processor 88 also takes care of the various tasks at system level such as interrupt handling, error recovery, and the like.
The performance of the proposed system depends on several parameters important for the efficient operation of the system. As the cameras operate in close proximity to the object proper focusing distance, and color temperature must be maintained. The cameras should be balanced in those aspects in order to accomplish uniform performances of both cameras at all times during a given session.

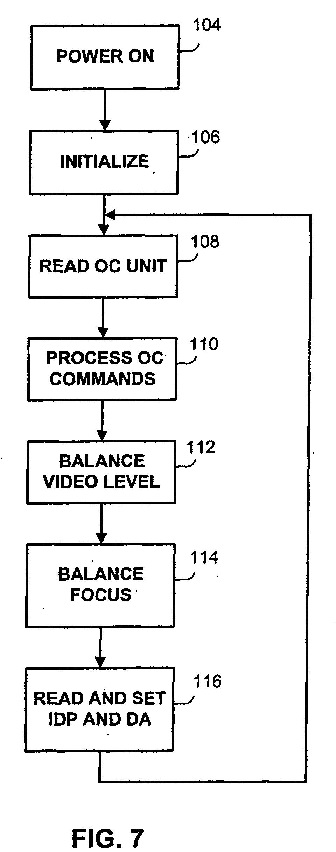

Referring now to Fig. 7 where the logical flow of the main operating function of the system is shown. At step 104 the power is turned on as the operator activates Power control 67 of Fig. 5. Subsequently at step 106 the system is initialized. The initialization procedure is the system startup during which all the functional parameters are reset to predefined values stored in specific data structures such as tables and the like on storage device 84. A detailed description of the initialization procedure will be set forth hereunder in association with the following drawings. At step 108 the OC 40 of Fig. 5 is accessed to read the operator's instructions entered manually via specific controls such as pushbuttons described in Fig. 5. At step 110 the OC commands are processed by processor device 88 of Fig. 6. The detailed description of the process will be set forth hereunder in association with the following drawings. At step 112 the average video level is read from both cameras and the cameras are balanced regarding video levels. The detailed description of the process will be set forth hereunder in association with the following drawings. At step 114 the focus setting is read from both cameras and the cameras are balanced in regard to the focusing distance. The detailed description of the process will be set forth hereunder in association with the following drawings. At step 116 the IDP and DA are set according to previously obtained values of the focus. The detailed description of the process will be set forth hereunder in association with the following drawings.

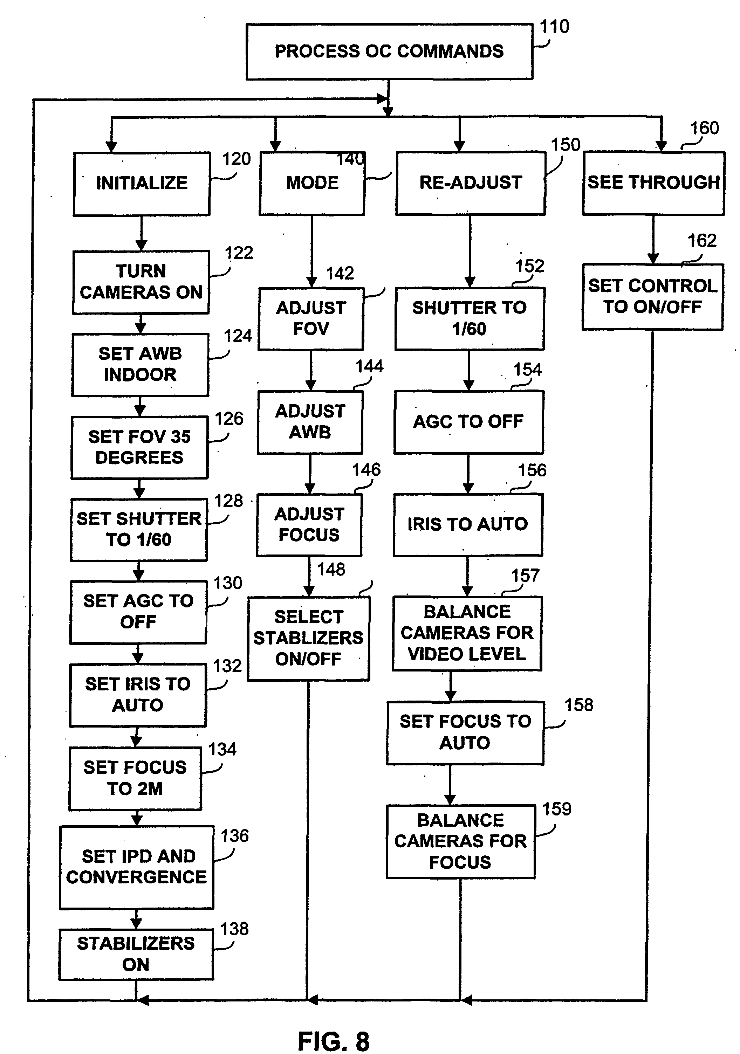

Referring now to Fig. 8 illustrating the sequence of control activation on Operator Controller. 40. The basic procedures and modes of operation of the system, which are controlled by the operator utilizing OC 40, are as follows:
a) Initialize Mode
b) Readjust Mode
c) Normal run (Automatic mode)
d) Manual Modification of System Parameters

Through the OC 40 the operator provided with the option to activate all the procedures and operations described above. The Initialize 106 of Fig. 7 procedure will work in two situations: when the power is turned on subsequent to the activation of Power switch 67 of Fig. 5 or when the Initialize control 68 of Fig. 5 is being employed. By employing Initialize 68 of Fig. 5 the operator activates a series of predefined functions stored on storage devices 84 of Fig. 6 that will be executed automatically by processor device 88 of Fig. 6. At step 120 the initialize sequence begins starting up the system and subsequently all the functional parameters are reset to specifically defined predetermined values. The operative stages performed in the Initialize procedure are as follows:
a) At step 122 the cameras 22 and 24 are turned on
b) At step 124 the Auto White Balance on cameras 22 and 24 is set to the value of Indoor.
c) At step 126 the Field of View is set to about 35 degrees
d) At step 128 the Shutter speed is set to about 1/60 seconds
e) At step 130 the Automatic Gain Control (AGC) is set to OFF. AGC is an electronic circuitry that compensates for either audio or video input level changes by boosting or lowering incoming signals to match a preset level. Using AGC, changing input levels can output at a single constant. setting.
f) At step 132 the Iris is set to Auto in order to enter Shutter Priority mode
g) At step 134 the focus is set to the value of about 1.5 meters (about 5 feet)
h) At step 136 the Inter Pupillary Distance (IDP) is set to the value of about 75 mm (about 3 inches) and the Convergence Angle to about 2 - 4 degrees (preferably 2.9 degrees).
i) At step 138 the Stabilizers are set to ON to prevent automatic changes of the current parameters.
The Initialize function will return control to the main function and subsequently enter Normal Run (Automatic Mode) operation in order to begin the process of continuously adjusting of the operative system parameters.
The Readjust procedure 150 is evoked when some environmental factors such as the intensity of the ambient lighting has been changed, the positioning of the cameras regarding the IDP and the Convergence Angle is changing rapidly or both video channels associated with the cameras 22 and 24 become unbalanced. The steps executed during Readjust procedure 150 are similar to those of Initialize procedure 120 but without resetting all the parameters of the system to predefined default values. During Readjust procedure 150 the See-Through control 72 of Fig. 5 will be preferably activated in order to prevent the rapid changes in the images to be displayed to user 10. Subsequent to the activation of Readjust control 70 of Fig. 5 the respective function will be loaded from storage device 84 and executed by processor device 88 of Fig. 5. The steps performed by the function are as following:
a) At step 152 the Shutter speed is set to about 1/60 seconds
b) At step 154 Automatic Gain Control is set to OFF
c) At step 156 the Iris is set to automatic mode
d) At step 157 the cameras are balanced respective to video level
e) At step 158 the focus is set to automatic
f) At step 159 the cameras are balanced respective to the focusing distance.
The Readjust function will return control to the main logic function and as a result will enter Normal Run (Automatic Mode) in order to begin the continuous, automatic, and online adjustment of the operative system parameters.
The operator is provided the option of manually modifying several parameters of the system using the Mode control 74 of Fig. 5. By repeatedly and intermittently activating Mode control 74 at step 140 the operator selects the desired mode of operation in which specific parameters can be modified. All modifications will be operative for both cameras. According to the selection made a visual indicator specific to the selected mode will appear on display screen 66. of Fig. 5. The default mode is the FOV mode or the modification of Field of View. The FOV is adjusted at step 142 through the activation of Up control 76 or Down control 78, which in FOV mode correspond respectively to Zoom-In and Zoom-Out operations. As a result changing the value of FOV is effective in increasing or decreasing the size of the images received. Consequently magnification of the view is accomplished in this manner.

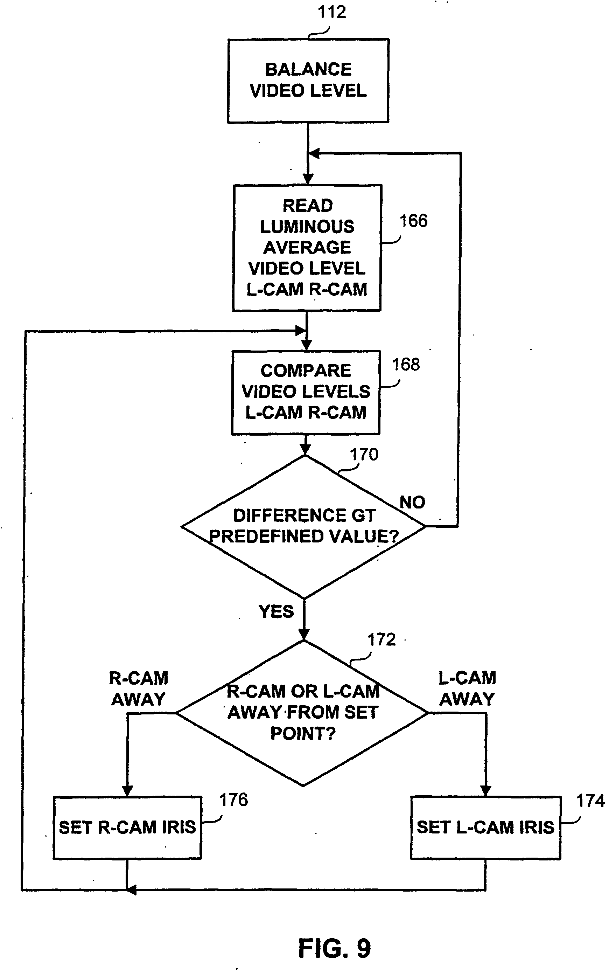

At step 144 AWB alternative mode is selected. In AWB mode White Balance is adjusted for both cameras. The user provided with the option of switching among three predefined values of White Balance Adjustment. The values are as follows:
a) Indoor: to correct colors of the images according to artificial lighting.
b) Outdoor: the colors of the images are corrected to the natural lighting of about 6500 degrees Kelvin.
c) Auto - Automatic AWB is performed.
At step 146 the operator balances the focus between the cameras. The focusing distances of both cameras are checked and adjusted if necessary. When the focusing distance is modified for the cameras the IPD is calculated and modified. Since stereoscopic .vision is optimal when the typical average value of the IDP is 1/20 of the distance between a stereoscopically enabled observer and the nearest clearly seen object of the observed space the value of IPD is set to about 1/20 of the focusing distance with a minimum value of about 50 - 60 mm (preferably 53 mm). Following the modification of the IDP the Convergence Angle DA is obtained by accessing a suitable data structure such as a lookup table and extracting the appropriate value.
Turning now to Fig. 9 that shows the process of automatic balancing the video level 112. At step 166 the luminous average video level is read from both cameras and at step 168 the values obtained from the cameras is compared to each other. At step 170 it is determined whether the difference of the video level between the two cameras is greater than a predefined value such as 10%. If the difference is greater than the predefined value then step 172 each camera is checked to determine which camera has a setting away from a predefined set video level value such as about 1.0 Volt peek to peek. According to the result at step 176 or at step 174 the iris of the respective camera is adjusted to the predefined set value. Subsequently control returns to step 168 to repeat the process of the balancing. When at step 168 it is found that the difference between the video levels of the cameras is less than a predefined value then control returns to step 166 to obtain the luminous video level of the cameras again.

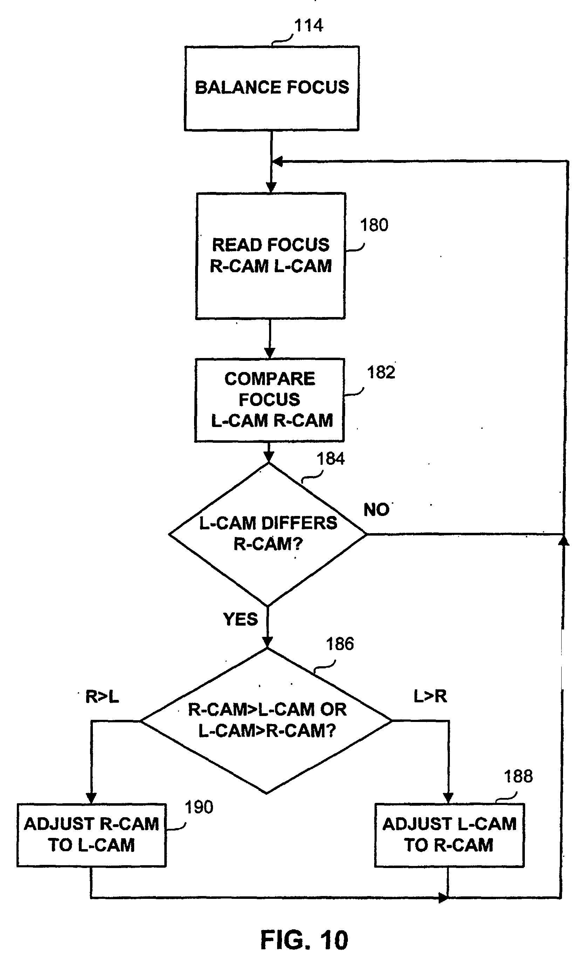

Referring now to Fig. 10 that shows the flow of control associated with the automatic balancing of the focus setting 114 of the cameras relative to each other. At step 180 the focusing distance settings of both cameras are obtained and compared for difference at step 182. At step 184 it is determined whether there is a difference between the settings. When no difference is found control returns to step 180 in order to repeat the balancing process. If the settings are found to be different at step 186 it is determined which camera has a focus setting that is higher than the value of the other camera. According to the result at step 190 or step 188 the focus of the camera with a higher focus value is reset to the value of the other camera.

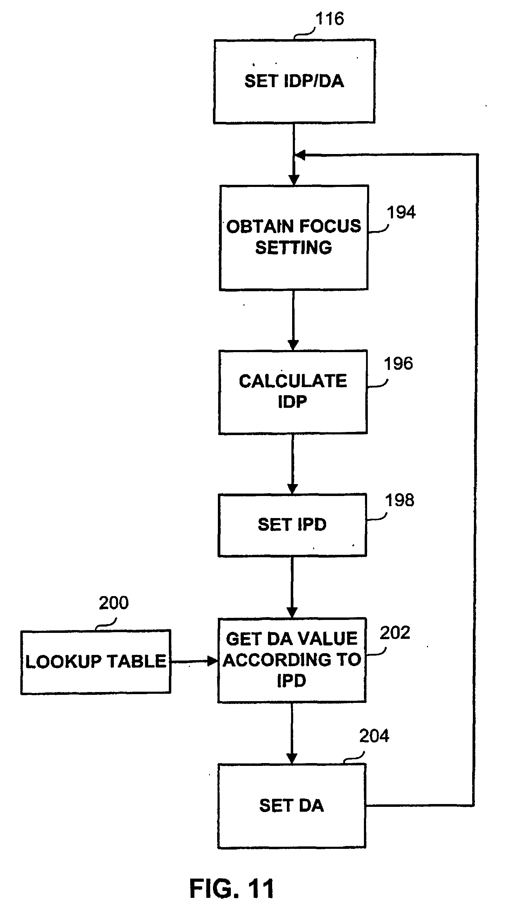

Referring now to Fig. 11 that shows the flow of logic associated with the automatic setting of the IDP and DA 116. At step 194 the focus setting of both cameras is read and at step 196 the IDP is calculated. At step 198 the IDP is set and at step 202 the value of IPD will enable the extraction of the value of the DA from a lookup table held on the storage device at step 200. The value of DA is set at step 204. The results are fed into the servo interface 90 of Fig. 6, are translated into appropriate signals and are sent to the IPD/DA controlling mechanism 46 of Fig. 6. Function control then returns to step 194 to obtain readings of the focus settings from both cameras and repeat the process.

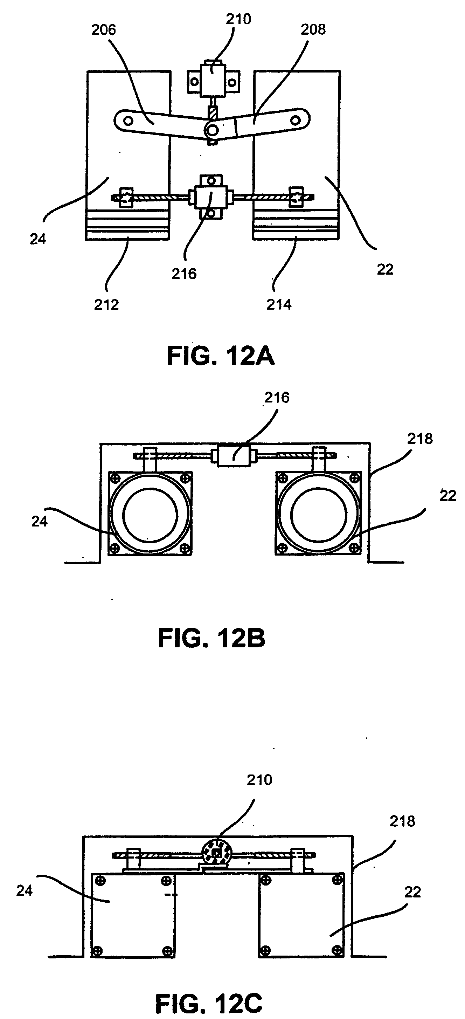

Referring now to Fig. 12A, 12B, and 12C showing the mechanical structure of Cameras Module 20 of Fig.6 including the motors 216 and 210 with associated mechanical parts. Cameras 22 and 24 are hanging down from a base 218 where the anchoring points of the mechanism to base 218 are bolts holding both motors 210 and 216. The front motor 216 is equipped with a double-sided axis with opposite direction threads. The bolts holding camera 22 and 24 are having the same thread, therefore when motor 216 rotates in one direction the front side 212 and 214 of cameras 22 respectively will move closer to each other or will move farther from each other. In order to make the described motion possible the connection between the bolts and the cameras 22 and 24 housings can rotate freely but will not change position. The rear motor 210 is also equipped with a threaded shaft that moves both arms 206 and 208. Consequently the distance between the rear parts of cameras 22 and 24 will increase or decrease according to the direction of the motor 210 movement. The described mechanism provides the control of both the IPD and the Convergence Angle.

It would be easily perceived by one skilled in the art that the above description merely illustrates the underlying concept of the present invention and refers only to one possible arrangement among many conceivable designs that could be effective in the manufacture of the proposed system.
In another embodiment of the present invention auxiliary equipment will be added such as recording and playback, audio and communications in order to correspond to a typical operation room configuration.
Yet in another preferred embodiment of the present invention a more compact version of the system will be provided with an added light source, operated on batteries or car battery connector. In this embodiment the system could be used by the military or by emergency crews acting outdoors.
Still in another preferred embodiment of the present invention the proposed system will contain monochrome Intensified cameras (ICCD), for Low Light operations for military use.

It will be appreciated by persons skilled in the art that the present invention is not limited to what has been particularly shown and described hereinabove. Rather the scope of the present invention is defined only by the claims which follow.

## Claims

1. A method of displaying in real time, dynamic, variably magnified, optimized, and stereoscopically emulated images of a physical application space to a human operator, in order to assisting in the process of close observation, and the manipulation of objects within said application space, the method comprising:
generating dynamic images of said application space by image-generating devices;
encoding the dynamic images into encoded electric signals;
transmitting said encoded electric signals representing the dynamic images to display devices positioned in optical alignment with the eyes of said human operator;
decoding the encoded signals representing the dynamic images into reproduced images; and
displaying said reproduced images to the eyes of the human operator,
**characterised by** monitoring the image quality control parameter values of the image-generating devices; and
automatically adjusting the stereoscopic quality related physical positions of the image-generating devices in accordance with said image quality control parameter values for obtaining optimized stereoscopic quality;
and wherein said stereoscopic quality related physical positions of the image-generating devices include the inter pupillary distance (IPD) between said image-generating devices and the convergence angle (DA) between the lines of sight of said image-generating devices.

2. The method of claim 1 wherein the step of automatically adjusting the stereoscopic quality related physical positions of the image-generating devices comprises the steps of
calculating according to said monitored image quality control parameter values the optimal stereoscopic quality control parameter values, said optimal stereoscopic quality control parameter values include an optimal IPD value and accordingly an optimal DA value;
transmitting said calculated optimal stereoscopic quality control parameter values to spatial control devices;
transforming said calculated optimal stereoscopic quality control parameter values into appropriate physical positioning signals;
physically positioning the image-generating devices to spatial locations in accordance with said optimal IPD and DA values; and
repeating the above said steps.

3. The method of claim 1 further comprises the step of:
automatically balancing the image quality control parameter settings of the image-generating devices.

4. The method of claim 3 wherein the step of automatically balancing the image quality control parameter settings comprises the steps of:
monitoring the image quality control parameter values of a first image-generating device;
monitoring the image quality control parameter values of a second image-generating device;
comparing said image quality control parameters values of said first image-generating device and said second image-generating device;
equalizing the image quality control parameter values of the first image generating device and the second image-generating device;
repeating the above said steps.

5. The method of claim 1 further comprises the step of manually controlling the image quality control parameters of the image-generating devices.

6. The method of claim 5 wherein the step of manually controlling the image quality control parameters comprises the steps of:
initializing the image quality control parameter values of the image-generating devices;
readjusting selectively said image quality control parameter values of the image-generating devices;
resetting selectively at least one of the image quality control parameter values of the image-generating devices;
stabilizing the image quality control parameter values of the image-generating devices;
selectively disconnecting the image-generating devices from said display devices to enable observation of said application space through the display devices in the line of sight.

7. The method of claim 6 whereby the step of resetting selectively at least one of the image quality control parameter values comprises the steps of:
controlling the field of view and the magnification of the displayed images;
regulating the color balance of the displayed images;
adjusting the sharpness of the displayed images;
setting the brightness of the displayed images.

8. A method of providing a human operator with colored, high-definition, variably magnified, dynamic, stereoscopic, qualitatively optimized, reproduced video images of a physical operating environment in order to aid said human operator during an observation and manipulation session associated with objects within said environment, the method comprising the method as claimed in any of the preceding claims, and wherein:
the image-generating devices comprise video cameras which produce dynamic video images of the observation and manipulation session;
the encoded electrical signals comprise video signals;
the image-generating devices comprise viewing screens situated between the operating environment and the eyes of the human operator;
the step of monitoring the image quality control parameter values of the image-generating devices comprises monitoring changes made accidentally, manually or automatically to said image quality control parameters; and
the step of automatically adjusting the stereoscopic quality related physical positions comprises automatically optimizing the physical locations of the video cameras with respect to each other.

9. The method of claim 8 further comprising the step of:
balancing said image quality control parameter values among the video cameras in order to achieve uniform images on said viewing screens.

10. The method of claim 8 further comprising the step of manually adjusting the operative image quality control parameter values of the video cameras by the human operator.

11. The method of claim 10 whereby the step of manually adjusting comprises the steps of:
initializing the operative settings of the video cameras to pre-selected values;
selectively re-adjusting said operative settings of the video cameras to pre-selected values;
selectively resetting at least one operative setting of the video cameras to values determined;
disabling automatic adjustment of the operative settings of the video cameras;
disabling the display of video images on the viewing screens to provide clear view of the human operator in the line of sight.

12. The method of claim 11 whereby the step of initializing the operative settings comprises the steps of:
activating the video cameras;
setting color balance control to predefined value;
setting magnification to pre-defined value;
setting shutter speed to pre-defined value;
disconnecting automatic gain control;
enabling automatic iris control;
setting focusing distance to pre-defmed value;
calculating value of inter-pupillary-distance according to focusing distance;
obtaining value of convergence angle according to value of inter-pupillary-distance;
effecting movements of video cameras corresponding to inter-pupillary-distance and convergence angle;
stabilizing video cameras controls.

13. The method of claim 11 whereby the step of selectively re-adjusting comprises the steps of:
setting shutter speed to pre-defined value;
disabling automatic gain control;
enabling automatic iris control;
enabling automatic focusing control;
balancing video cameras in respect to luminance level;
balancing video cameras in respect to focusing distance.

14. The method of claim 8 wherein the step of automatically optimizing the physical locations of the video cameras in respect to each other comprises the steps of:
monitoring the focusing distance settings of the video cameras;
calculating the optimal value of the inter-pupillary-distance and the corresponding convergence angle;
transforming the resulting values into suitable electric control signals by an operative servo motor interface;
activate appropriate servo motor devices operative in the positioning of the video cameras in respect to each other;
repeating the above said steps.

15. The method of claim 14 wherein the result of said calculation of the inter-pupillary distance is obtained by dividing the focusing distance by a predefined value.

16. The method of claim 14 wherein the result of calculating the converging angle is obtained by fetching the desired value from a predefined table according to the calculated inter-pupillary distance.

17. A stereoscopic video observation and magnification system comprising:
two video cameras (22,24) mechanically linked, embedded into a cameras module (20) wearable by the human operator (10);
two display screens (62,64) embedded into a head mounted display unit (30) wearable by the human operator;
an operator controller unit (40) wearable by the human operator,
an interface and processing unit (50); and
a suitable video circuit connecting said two video cameras (22,24), said two display screens (62,64) via which the video cameras transmit suitable electric signals representing dynamic images of the operating environment to be displayed on the display screens;
**characterised by** serial communication links and a serial circuit via which digital signals representing the image quality control parameter values of the video cameras are sent to the interface and processing unit (50), and to the operator controller (40) in order to enable monitoring and consequently automatic balancing and optimizing of the reproduced images;
and wherein the cameras module comprises:
a first servo motor (210) coupled to the video cameras to effect positioning of
the cameras in respect to the distance among the two cameras; and
a second servo motor (216) coupled to the two video cameras to effect positioning of the cameras in respect to the convergence angle formed by
the respective lines of sight to the objects in the operating space;
therby forming a controllable Inter pupillary distance/converging angle mechanism.

18. The system of claim 17 wherein the operator controller unit comprising:
a display screen to indicate the system status, the image quality control parameters values, and the current operating mode;
an initialize control to provide the human operator with the option of setting the image quality control parameter to pre-defined values;
a readjust control to provide the operator with the option of re-adjusting image quality control parameter values;
a mode control to manually select image quality control parameters;
an up control and a down control to manually adjust parameter values respective to the current mode; and
a see-through control to disconnect the video signals transmitted by the video cameras to the viewing screen in order to enable the operator to view the operating space along the natural line of sight

19. The system of claim 18 wherein the controls are pushbuttons.

20. The system of claim 17 wherein the interface and processing unit comprising:
a main control device to turn on and turn off the system;
a camera video interface to handle the video signals received from the video cameras;
a camera command interface to handle digital signals corresponding to image quality control parameter values received from video cameras and to transmit processed digital signals from the processor device to the respective cameras;
a head mounted display interface to transmit the electric signals corresponding to the video images to the viewing screens;
a servo interface to translate video cameras positioning related control signals to suitable servo commands and send said servo commands to the respective location adjustment mechanism;
a storage device to hold executable control functions, control tables and pre-defined image quality control parameter values;
a processor device to process digital signals respective to the image quality control parameter values;
a control unit interface to receive commands from the operator;
a power supply/DC converter device; and
a timing and control unit.

21. The system of claim 20 wherein the main control device is a guarded switch.

22. The system of claim 17 wherein the viewing screens are Liquid Crystal Devices.

23. The system of claim 17 wherein the video cameras having S-VHS output.

24. The system of claim 17 wherein the viewing screens having built-in see-through capability.

25. The system of claim 17 further comprises recording and playback capabilities concerning the generated dynamic images.

## Patentansprüche

1. Verfahren zum Anzeigen dynamischer, variabel vergrößerter, optimierter und stereoskopisch emulierter Bilder eines physikalischen Anwendungsraums für eine menschliche Bedienungsperson in Echtzeit, um den Prozess naher Betrachtung und die Handhabung von Gegenständen innerhalb des genannten Anwendungsraums zu unterstützen, wobei das Verfahren umfasst:
Erzeugen dynamischer Bilder des genannten Anwendungsraums durch Bilderzeugungseinrichtungen;
Codieren der dynamischen Bilder zu codierten elektrischen Signalen;
Übertragen der genannten codierten elektrischen Signale, die die dynamischen Bilder darstellen, zu Anzeigeeinrichtungen, die in optischer Ausrichtung mit den Augen der genannten menschlichen Bedienungsperson positioniert sind;
Decodieren der codierten, die dynamischen Bilder darstellenden Signale, zu reproduzierten Bildern; und
Anzeigen der genannten reproduzierten Bilder den Augen der menschlichen Bedienungsperson, **gekennzeichnet durch** Kontrollieren der Bildqualitäts-Steuerparameterwerte der Bilderzeugungseinrichtungen; und
automatisches Anpassen der mit stereoskopischer Qualität verknüpften physikalischen Positionen der Bilderzeugungseinrichtungen in Übereinstimmung mit den genannten Bildqualitäts-Steuerparameterwerten zum Erhalten optimierter stereoskopischer Qualität;
und bei dem die genannten mit stereoskopischer Qualität verknüpften physikalischen Positionen der Bilderzeugungseinrichtungen den Abstand zwischen Pupillen (inter pupillary distance IPD) zwischen den genannten Bilderzeugungseinrichtungen und den Konvergenzwinkel (DA) zwischen den Sichtlinien der genannten Bilderzeugungseinrichtungen einschließen.

2. Verfahren nach Anspruch 1, bei dem der Schritt zum automatischen Anpassen der mit stereoskopischer Qualität verknüpften physikalischen Positionen der Bilderzeugungseinrichtungen die folgenden Schritte umfasst:
Berechnen der optimalen Steuerparameterwerte für stereoskopische Qualität gemäß den genannten kontrollierten Bildqualitäts-Steuerparameterwerten, wobei die genannten optimalen Steuerparameterwerte für stereoskopische Qualität einen optimalen IPD-Wert und dementsprechend einen optimalen DA-Wert einschließen;
Übertragen der genannten berechneten optimalen Steuerparameterwerte für stereoskopische Qualität zu Raumsteuereinrichtungen;
Umwandeln der genannten berechneten optimalen Steuerparameterwerte für stereoskopische Qualität zu geeigneten physikalischen Positionierungssignalen;
physikalisches Positionieren der Bilderzeugungseinrichtungen an Raumstellungen in Übereinstimmung mit den genannten optimalen IPD und DA-Werten; und
Wiederholung der oben genannten Schritte.

3. Verfahren nach Anspruch 1, das ferner den Schritt umfasst:
automatisches Abgleichen der Bildqualitäts-Steuerparametereinstellungen der Bilderzeugungseinrichtungen.

4. Verfahren nach Anspruch 3, bei dem der Schritt zum automatischen Abgleichen der Bildqualitäts-Steuerparametereinstellungen die folgenden Schritte aufweist:
Kontrollieren der Bildqualitäts-Steuerparameterwerte einer ersten Bilderzeugungseinrichtung;
Kontrollieren der Bildqualitäts-Steuerparameterwerte einer zweiten Bilderzeugungseinrichtung;
Vergleichen der genannten Bildqualitäts-Steuerparameterwerte der genannten ersten Bilderzeugungseinrichtung und der genannten zweiten Bilderzeugungseinrichtung;
Ausgleichen der Bildqualitäts-Steuerparameterwerte der ersten Bilderzeugungseinrichtung und der zweiten Bilderzeugungseinrichtung;
Wiederholen der oben genannten Schritte.

5. Verfahren nach Anspruch 1, das ferner den Schritt aufweist, manuell die Bildqualitäts-Steuerparameter der Bilderzeugungseinrichtungen zu steuern.

6. Verfahren nach Anspruch 5, bei dem der Schritt zum manuellen Steuern der Bildqualitäts-Steuerparameter die folgenden Schritte aufweist:
Initialisieren der Bildqualitäts-Steuerparameterwerte der Bilderzeugungseinrichtungen;
selektives Nachregulieren der genannten Bildqualitäts-Steuerparameterwerte der Bilderzeugungseinrichtungen;
selektives Neueinstellen wenigstens eines der Bildqualitäts-Steuerparameterwerte der Bilderzeugungseinrichtungen;
Stabilisieren der Bildqualitäts-Steuerparameterwerte der Bilderzeugungseinrichtungen; selektives Trennen der Bilderzeugungseinrichtungen von den genannten Anzeigeeinrichtungen zum Ermöglichen von Betrachtung des genannten Anwendungsraums durch die Anzeigeeinrichtungen in der Sichtlinie.

7. Verfahren von Anspruch 6, bei dem der Schritt zum selektiven Neueinstellen mindestens eines der Bildqualitäts-Steuerparameterwerte die folgenden Schritte aufweist:
Steuern des Sichtfelds und der Vergrößerung der angezeigten Bilder;
Regeln des Farbabgleichs der angezeigten Bilder;
Anpassen der Schärfe der angezeigten Bilder;
Einstellen der Helligkeit der angezeigten Bilder.

8. Verfahren zum Versehen einer menschlichen Bedienungsperson mit farbigen, hochaufgelösten, variabel vergrößerten, dynamischen, stereoskopischen, qualitativ optimierten, reproduzierten Videobildern einer physikalischen Arbeitsumgebung, um der genannten menschlichen Bedienungsperson während einer Beobachtungs- und Bedienungssitzung verknüpft mit Gegenständen innerhalb der genannten Umgebung zu helfen, wobei das Verfahren das Verfahren wie in einem der vorhergehenden Ansprüche beansprucht aufweist; und bei dem:
die Bilderzeugungseinrichtungen Videokameras aufweisen, die dynamische Videobilder der Beobachtungs- und Bedienungssitzung erzeugen;
die codierten elektrischen Signale Videosignale aufweisen;
die Bilderzeugungseinrichtungen Bildschirme aufweisen, die zwischen der Arbeitsumgebung und den Augen der menschlichen Bedienungsperson angeordnet sind; der Schritt zum Kontrollieren der Bildqualitäts-Steuerparameterwerte der Bilderzeugungseinrichtungen umfasst, unbeabsichtigt, manuell oder automatisch an den genannten Bildqualitäts-Steuerparametern vorgenommene Änderungen zu kontrollieren; und
der Schritt zum automatischen Anpassen der mit stereoskopischer Qualität verknüpften physikalischen Positionen aufweist, automatisch die physikalischen Stellungen der Videokameras in bezug zueinander zu optimieren.

9. Verfahren nach Anspruch 8, das ferner den folgenden Schritt aufweist:
Abgleichen der genannten Bildqualitäts-Steucrparameterwerte unter den Videokameras zum Erzielen einheitlicher Bilder auf den genannten Bildschirmen.

10. Verfahren nach Anspruch 8, das ferner den Schritt aufweist, manuell die operativen Bildqualitäts-Steuerparameterwerte der Videokameras durch die menschliche Bedienungsperson anzupassen.

11. Verfahren nach Anspruch 10, wobei der Schritt zum manuellen Anpassen die folgenden Schritte aufweist:
Initialisieren der Betriebseinstellungen der Videokameras auf vorgewählte Werte;
selektives Nachregulieren der genannten Betriebseinstellungen der Videokameras auf vorgewählte Werte;
selektives Neueinstellen mindestens einer Betriebseinstellung der Videokameras auf bestimmte Werte;
Ausschalten automatischer Einstellung der Betriebseinstellungen der Videokameras; Ausschalten der Anzeige der Videobilder auf den Bildschirmen, um eine klare Sicht der menschlichen Bedienungsperson in der Sichtlinie zu liefern.

12. Verfahren nach Anspruch 11, wobei der Schritt zum Initialisieren der Betriebseinstellungen die folgenden Schritte aufweist:
Aktivieren der Videokameras;
Einstellen von Farbabgleichssteuerung auf einen vordefinierten Wert;
Einstellen von Vergrößerung auf einen vordefinierten Wert;
Einstellung von Verschlusszeit auf einen vordefinierten Wert;
Ausschalten von automatischer Verstärkungssteuerung;
Einschalten von automatischer Irissteuerung;
Einstellen von Brennweite auf vordefinierten Wert;
Berechnen des Werts von Abstand zwischen Pupillen gemäß der Brennweite;
Erhalten eines Werts des Konvergenzwinkels gemäß dem Wert des Abstands zwischen Pupillen;
Bewirken von Bewegungen der Videokameras entsprechend dem Abstand zwischen Pupillen und Konvergenzwinkel;
Stabilisieren von Videokamerasteuerungen.

13. Verfahren nach Anspruch 11, wobei der Schritt zum selektiven Nachregulieren die folgenden Schritte aufweist:
Einstellen von Verschlusszeit auf einen vordefinierten Wert;
Ausschalten von automatischer Verstärkungssteuerung;
Einschalten von automatischer Irissteuerung;
Einschalten von automatischer Fokussiersteuerung;
Abgleichen von Videokameras in bezug zu Leuchtdichtegröße;
Abgleichen von Videokameras in bezug zu Brennweite.

14. Verfahren nach Anspruch 8, bei dem der Schritt zum automatischen Optimieren der physikalischen Stellungen der Videokameras in bezug zueinander die folgenden Schritte aufweist:
Kontrollieren der Brennweiteneinstellungen der Videokameras;
Berechnen des optimalen Werts des Abstands zwischen Pupillen und des entsprechenden Konvergenzwinkels;
Umwandeln der resultierenden Werte in geeignete elektrische Steuersignale durch eine operative Servomotorschnittstelle;
Aktivieren geeigneter Servomotoreinrichtungen, die operativ in der Positionierung der Videokameras in bezug zueinander sind;
Wiederholen der oben genannten Schritte.

15. Verfahren nach Anspruch 14, bei dem das Ergebnis der genannten Berechnung des Abstands zwischen Pupillen durch Teilen der Brennweite durch einen vordefinierten Wert erhalten wird.

16. Verfahren nach Anspruch 14, bei dem das Ergebnis der Berechnung des Konvergenzwinkels durch Abrufen des gewünschten Werts aus einer vordefinierten Tabelle gemäß dem berechneten Abstand zwischen Pupillen erhalten wird.

17. Stereoskopisches Videobeobachtungs- und Vergrößerungssystem, umfassend:
zwei mechanisch verbundene Videokameras (22, 24), die in ein Kameramodul (20) eingebettet sind, welches durch die menschliche Bedienungsperson (10) tragbar ist;
zwei Anzeigebildschirme (62, 64), die in eine am Kopf angebrachte Anzeigeeinheit (30) eingebettet sind, welche durch die menschliche Bedienungsperson tragbar ist;
eine Bedienungsperson-Kontrollereinheit (40), die durch die menschliche Bedienungsperson tragbar ist;
eine Schnittstellen- und Verarbeitungseinheit (50); und
eine geeignete Videoschaltung, die die genannten beiden Videokameras (22, 24) verbindet, wobei die genannten beiden Anzeigebildschirme (62, 64), über die die Videokameras geeignete elektrische Signale übertragen, dynamische Bilder der auf den Anzeigebildschirmen anzuzeigenden Arbeitungsumgebung darstellen;
**gekennzeichnet durch** serielle Kommunikationsverbindungen und eine Serienschaltung, über die Digitalsignale, welche die Bildqualitäts-Steuerparameterwerte der Videokameras darstellen, zu der Schnittstellen- und Verarbeitungseinheit (50) und zu dem Bedienungsperson-Kontroller (40) geschickt werden, um Kontrolle und folglich automatisches Abgleichen und Optimieren der reproduzierten Bildern zu ermöglichen, und wobei das Kameramodul aufweist:
einen ersten Servomotor (210) gekoppelt an die Videokameras, um Positionierung der Kameras in bezug zu dem Abstand zwischen den beiden Kameras zu bewirken; und
einen zweiten Servomotor (216) gekoppelt an die beiden Videokameras, um Positionierung der Kameras in bezug zu dem Konvergenzwinkel zu bewirken, der **durch** die jeweiligen Sichtlinien zu den Gegenständen in dem Arbeitsraum gebildet wird,
wodurch ein steuerbarer Mechanismus von Abstand zwischen Pupillen/Konvergenzwinkel gebildet wird.

18. System nach Anspruch 17, bei dem die Bedienungsperson-Kontrollereinheit aufweist:
einen Anzeigebildschirm zum Anzeigen des Systemstatus, der Bildqualitäts-Steuerparameterwerte und der aktuellen Betriebsart;
eine Initialisierungssteuerung, um der menschlichen Bedienungsperson die Option zu liefern, die Bildqualitäts-Steuerparameter auf vordefinierte Werte einzustellen;
eine Nachregelungssteuerung, um der Bedienungsperson die Option zu liefern, Bildqualitäts-Steuerparameterwerte nachzuregulieren;
eine Betriebsartsteuerung zum manuellen Auswählen von Bildqualitäts-Steuerparametern;
eine Aufwärtssteuerung und eine Abwärtssteuerung zum manuellen Anpassen von Parameterwerten jeweils an die aktuelle Betriebsart; und
eine durchsichtige Steuerung zum Ausschalten der Videosignale, die durch die Videokameras zu dem Bildschirm übertragen werden, um die Bedienungsperson in die Lage zu versetzen, den Arbeitsraum entlang der natürlichen Sichtlinie zu betrachten.

19. System nach Anspruch 18, bei dem die Steuerungen Drucktasten sind.

20. System nach Anspruch 17, bei dem die Schnittstellen- und Verarbeitungseinheit aufweist:
eine Hauptsteuereinrichtung zum Einschalten und Ausschalten des Systems;
eine Kameravideoschnittstelle zum Handhaben der von den Videokameras empfangenen Videosignale;
eine Kamerabefehlsschnittstelle zum Handhaben von Digitalsignalen entsprechend den Bildqualitäts-Steuerparameterwerten, die von den Videokameras erhalten werden, und zum Übertragen verarbeiteter Digitalsignale von der Prozessoreinrichtung zu den jeweiligen Kameras;
eine am Kopf angebrachte Anzeigeschnittstelle zum Übertragen der den Vidoebildern entsprechenden elektrischen Signale zu den Bildschirmen;
eine Servoschnittstelle zum Übersetzen mit Videokamerapositionierung verknüpfter Steuersignale in geeignete Servobefehle und Senden der genannten Servobefehle zu dem jeweiligen Stellungsanpassungsmechanismus;
eine Speichereinrichtung zum Halten ausführbarer Steuerfunktionen, Steuertabellen und vordefinierter Bildqualitäts-Steuerparameterwerte;
eine Prozessoreinrichtung zum Verarbeiten von Digitalsignalen entsprechend den Bildqualitäts-Steuerparameterwerten;
eine Steuereinheitsschnittstelle zum Empfangen von Befehlen von der Bedienungsperson;
eine Stromversorgungs-/Gleichstromwandlereinrichtung; und
eine Zeitabstimmungs- und Steuereinheit.

21. System nach Anspruch 20, bei dem die Hauptsteuereinrichtung ein Schutzschalter ist.

22. System nach Anspruch 17, bei dem die Bildschirme Flüssigkristalleinrichtungen sind.

23. System nach Anspruch 17, bei dem die Videokameras einen S-VHS-Ausgang aufweisen.

24. System nach Anspruch 17, bei dem die Bildschirme ein eingebautes Durchsichtvermögen aufweisen.

25. System nach Anspruch 17, das ferner Aufzeichnungs- und Wiedergabefähigkeiten bezüglich der erzeugten dynamischen Bilder aufweist.

## Revendications

1. Procédé d'affichage en temps réel d'images dynamiques, grossies de manière variable, optimisées et émulées stéréoscopiquement d'un espace d'application physique à un opérateur humain, afin d'aider le processus d'observation rapprochée, et la manipulation d'objets dans ledit espace d'application, le procédé comprenant :
la génération d'images dynamiques dudit espace d'application par des dispositifs générateurs d'images ;
le codage des images dynamiques en signaux électriques codés ;
la transmission desdits signaux électriques codés représentant les images dynamiques à des dispositifs d'affichage positionnés en alignement optique avec les yeux dudit opérateur humain ;
le décodage des signaux codés représentant les images dynamiques en images reproduites ; et
l'affichage desdites images reproduites pour les yeux de l'opérateur humain,
**caractérisé par** la surveillance des valeurs paramétriques de commande de qualité d'image des dispositifs générateurs d'images ; et
le réglage automatique des positions physiques liées à la qualité stéréoscopique des dispositifs générateurs d'images conformément auxdites valeurs paramétriques de commande de qualité d'image pour obtenir une qualité stéréoscopique optimisée ;
et dans lequel lesdites positions physiques liées à la qualité stéréoscopique des dispositifs générateurs d'images comportent la distance inter-pupillaire (IPD) entre lesdits dispositifs générateurs d'images et l'angle de convergence (DA) entre les lignes de visée desdits dispositifs générateurs d'images.

2. Procédé selon la revendication 1, dans lequel l'étape de réglage automatique des positions physiques liées à la qualité stéréoscopique des dispositifs générateurs d'images comprend les étapes de
calcul conformément auxdites valeurs paramétriques de commande de qualité d'image surveillées des valeurs paramétriques de commande de qualité stéréoscopique optimales, lesdites valeurs paramétriques de commande de qualité stéréoscopique optimales comportent une valeur IPD optimale et en conséquence une valeur DA optimale ;
transmission desdites valeurs paramétriques de commande de qualité stéréoscopique optimales calculées à des dispositifs de commande spatiale ;
transformation desdites valeurs paramétriques de commande de qualité stéréoscopique optimales calculées en signaux de positionnement physique appropriés ;
positionnement physique des dispositifs générateurs d'images aux emplacements spatiaux conformément auxdites valeurs IPD et DA optimales ; et
répétition desdites étapes ci-dessus.

3. Procédé selon la revendication 1, comprenant en outre l'étape de :
balance automatique des réglages paramétriques de commande de qualité d'image des dispositifs générateurs d'images.

4. Procédé selon la revendication 3, dans lequel l'étape de balance automatique des réglages paramétriques de commande de qualité d'image comprend les étapes de :
surveillance des valeurs paramétriques de commande de qualité d'image d'un premier dispositif générateur d'images ;
surveillance des valeurs paramétriques de commande de qualité d'image d'un deuxième dispositif générateur d'images ;
comparaison desdites valeurs paramétriques de commande de qualité d'image dudit premier dispositif générateur d'images et dudit deuxième dispositif générateur d'images ;
égalisation des valeurs paramétriques de commande de qualité d'image du premier dispositif générateur d'images et du deuxième dispositif générateur d'images ;
répétition desdites étapes ci-dessus.

5. Procédé selon la revendication 1, comprenant en outre l'étape de commande manuelle des paramètres de commande de qualité d'image des dispositifs générateurs d'images.

6. Procédé selon la revendication 5, dans lequel l'étape de commande manuelle des paramètres de commande de qualité d'image comprend les étapes de :
initialisation des valeurs paramétriques de commande de qualité d'image des dispositifs générateurs d'images ;
réajustement sélectif desdites valeurs paramétriques de commande de qualité d'image des dispositifs générateurs d'images ;
remise sélective à l'état initial d'au moins une des valeurs paramétriques de commande de qualité d'image des dispositifs générateurs d'images ;
stabilisation des valeurs paramétriques de commande de qualité d'image des dispositifs générateurs d'images ;
déconnexion sélective des dispositifs générateurs d'images desdits dispositifs d'affichage afin de permettre l'observation dudit espace d'application par le biais des dispositifs d'affichage dans la ligne de visée.

7. Procédé selon la revendication 6, dans lequel l'étape de remise sélective à l'état initial d'au moins une des valeurs paramétriques de commande de qualité d'image comprend les étapes de :
commande du champ de visée et du grossissement des images affichées ;
régulation de la balance des couleurs des images affichées ;
réglage de la netteté des images affichées ;
réglage de la luminosité des images affichées.

8. Procédé de fourniture à un opérateur humain d'images vidéo colorées, de haute définition, grossies de manière variable, dynamiques, stéréoscopies, qualitativement optimisées, reproduites d'un environnement d'exploitation physique afin d'aider ledit opérateur humain durant une session d'observation et de manipulation associée à des objets dans ledit environnement, le procédé comprenant le procédé tel que revendiqué dans l'une quelconque des revendications précédentes, et dans lequel :
les dispositifs générateurs d'images comprennent des caméras vidéo qui produisent des images vidéo dynamiques de la session d'observation et de manipulation ;
les signaux électriques codés comprennent des signaux vidéo ;
les dispositifs générateurs d'images comprennent des écrans de visualisation situés entre l'environnement d'exploitation et les yeux de l'opérateur humain ;
l'étape de surveillance des valeurs paramétriques de commande de qualité d'image des dispositifs générateurs d'images comprend la surveillance de changements apportés accidentellement, manuellement ou automatiquement, auxdits paramètres de commande de qualité d'image ; et
l'étape de réglage automatique des positions physiques liées à la qualité stéréoscopique comprend l'optimisation automatique des emplacements physiques des caméras vidéo les uns par rapport aux autres.

9. Procédé selon la revendication 8, comprenant en outre l'étape de :
balance desdites valeurs paramétriques de commande de qualité d'image entre les caméras vidéo afin d'obtenir des images uniformes sur lesdits écrans de visualisation.

10. Procédé selon la revendication 8, comprenant en outre l'étape de réglage manuel des valeurs paramétriques de commande de qualité d'image opérationnelles des caméras vidéo par l'opérateur humain.

11. Procédé selon la revendication 10, par lequel l'étape de réglage manuel comprend les étapes de :
initialisation des réglages opérationnels des caméras vidéo sur des valeurs présélectionnées ;
réajustement sélectif desdits réglages opérationnels des caméras vidéo sur des valeurs présélectionnées ;
remise sélective d'au moins un réglage opérationnel des caméras vidéo sur des valeurs déterminées ;
désactivation du réglage automatique des réglages opérationnels des caméras vidéo ;
désactivation de l'affichage d'images vidéo sur les écrans de visualisation afin de fournir une vue dégagée de l'opérateur humain dans la ligne de visée.

12. Procédé selon la revendication 11, par lequel l'étape d'initialisation des réglages opérationnels comprend les étapes de :
activation des caméras vidéo ;
réglage de la commande de balance des couleurs sur une valeur prédéfinie ;
réglage du grossissement sur une valeur prédéfinie ;
réglage de la vitesse d'obturation sur une valeur prédéfinie ;
déconnexion de la commande automatique de gain ;
activation de la commande automatique de diaphragme iris ;
réglage de la distance de mise au point sur une valeur prédéfinie ;
calcul de la valeur de distance inter-pupillaire en fonction de la distance de mise au point ;
obtention de la valeur de l'angle de convergence en fonction de la valeur de la distance inter-pupillaire ;
réalisation de mouvement de caméras vidéo correspondant à la distance inter-pupillaire et à l'angle de convergence ;
stabilisation des commandes des caméras vidéo.

13. Procédé selon la revendication 11, par lequel l'étape de réajustement sélectif comprend les étapes de :
réglage de la vitesse d'obturation sur une valeur prédéfinie ;
déconnexion de la commande automatique de gain ;
activation de la commande automatique de diaphragme iris ;
activation de la commande automatique de mise au point ;
balance des caméras vidéo en fonction du niveau de luminance ;
balance des caméras vidéo en fonction de la distance de mise au point.

14. Procédé selon la revendication 8, dans lequel l'étape d'optimisation automatique des emplacements physiques des caméras vidéo les uns par rapport aux autres comprend les étapes de :
surveillance des réglages de distance de mise au point des caméras vidéo ;
calcul de la valeur optimale de la distance inter-pupillaire et de l'angle de convergence correspondant ;
transformation des valeurs résultantes en signaux de commande électriques convenables par une interface de servomoteur opérationnelle ;
activation de dispositifs de servomoteur appropriés opérationnels dans le positionnement des caméras vidéo les unes par rapport aux autres ;
répétition desdites étapes ci-dessus.

15. Procédé selon la revendication 14, dans lequel le résultat dudit calcul de la distance inter-pupillaire est obtenu en divisant la distance de mise au point par une valeur prédéfinie.

16. Procédé selon la revendication 14, dans lequel le résultat du calcul de l'angle de convergence est obtenu en extrayant la valeur désirée dans une table prédéfinie conformément à la distance inter-pupillaire calculée.

17. Système d'observation et de grossissement vidéo stéréoscopique comprenant :
deux caméras vidéo (22, 24), liées mécaniquement, intégrées dans un module de caméras (20) portable par l'opérateur humain (10) ;
deux écrans d'affichage (62, 64) intégrés dans une unité d'affichage montée sur la tête (30) portable par l'opérateur humain ;
une unité de contrôleur d'opérateur (40) portable par l'opérateur humain ;
une interface et unité de traitement (50) ; et
un circuit vidéo convenable connectant lesdites deux caméras vidéo (22, 24), lesdits deux écrans d'affichage (62, 64) par lesquels les caméras vidéo transmettent des signaux électriques convenables représentant des images dynamiques de l'environnement d'exploitation à afficher sur les écrans d'affichage ;
**caractérisé par** des liaisons de communication série et un circuit série par l'intermédiaire desquels les signaux numériques représentant les valeurs paramétriques de commande de qualité d'image des caméras vidéo sont envoyés à l'interface et unité de traitement (50), et au contrôleur d'opérateur (40) afin de permettre la surveillance et en conséquence la balance et l'optimisation automatiques des images reproduites ;
et dans lequel le module de caméras comprend :
un premier servomoteur (210) couplé aux caméras vidéo afin d'effectuer le positionnement des caméras par rapport à la distance entre les deux caméras ; et
un deuxième servomoteur (216) couplé aux deux caméras vidéo pour effectuer le positionnement des caméras par rapport à l'angle de convergence formé par les lignes de visée respectives avec les objets dans l'espace d'exploitation ;
formant ainsi un mécanisme à distance inter-pupillaire/angle de convergence contrôlables.

18. Système selon la revendication 17, dans lequel l'unité de contrôleur d'opérateur comprend :
un écran d'affichage pour indiquer l'état du système, les valeurs paramétriques de commande de qualité d'image, et le mode d'exploitation en cours ;
une commande d'initialisation pour fournir à l'opérateur humain l'option de régler le paramètre de commande de qualité d'image sur des valeurs prédéfinies ;
une commande de réajustement pour fournir à l'opérateur l'option de réajuster les valeurs paramétriques de commande de qualité d'image ;
une commande de mode pour sélectionner manuellement des paramètres de commande de qualité d'image ;
une commande vers le haut et une commande vers le bas pour régler manuellement des valeurs paramétriques en fonction du mode en cours ; et
une commande de visualisation en transparence pour déconnecter les signaux vidéo transmis par les caméras vidéo à l'écran de visualisation afin de permettre à l'opérateur de visualiser l'espace d'exploitation dans la ligne de visée naturelle.

19. Système selon la revendication 18, dans lequel les commandes sont des boutons-poussoirs.

20. Système selon la revendication 17, dans lequel l'interface et unité de traitement comprend :
un dispositif de commande principal pour mettre en marche et arrêter le système ;
une interface vidéo de caméras pour prendre en charge les signaux vidéo reçus des caméras vidéo ;
une interface de commande de caméras pour prendre en charge des signaux numériques correspondant à des valeurs paramétriques de commande de qualité d'image reçues des caméras vidéo et transmettre des signaux numériques traités depuis le dispositif processeur jusqu'aux caméras respectives ;
une interface d'affichage montée sur la tête pour transmettre les signaux électriques correspondant aux images vidéo aux écrans de visualisation ;
une interface asservie pour traduire les signaux de commande liés au positionnement des caméras vidéo en commandes asservies convenables et envoyer lesdites commandes asservies aux mécanismes de réglage d'emplacement respectifs ;
un dispositif de mémorisation pour contenir des fonctions de commande exécutables, des tables de commande, et des valeurs paramétriques de commande de qualité d'image prédéfinies ;
un dispositif de processeur pour traiter des signaux numériques en fonction des valeurs paramétriques de commande de qualité d'image ;
une interface d'unité de commande afin de recevoir des commandes de l'opérateur ;
un dispositif d'alimentation électrique/convertisseur CC ; et
une unité de temporisation et de commande.

21. Système selon la revendication 20, dans lequel le dispositif de commande principale est un commutateur gardé.

22. Système selon la revendication 17, dans lequel les écrans de visualisation sont des dispositifs à cristaux liquides.

23. Système selon la revendication 17, dans lequel les caméras vidéo ont une sortie S-VHS.

24. Système selon la revendication 17, dans lequel les écrans de visualisation ont une capacité de visualisation en transparence intégrée.

25. Système selon la revendication 17, comprenant en outre des capacités d'enregistrement et de reproduction concernant les images dynamiques générées.
